Europäisches Patentamt

European Patent Office

Office européen des brevets

(19)

(11) **EP 1 124 342 A2**

(12) **EUROPÄISCHE PATENTANMELDUNG**

(43) Veröffentlichungstag:
**16.08.2001 Patentblatt 2001/33**

(51) Int Cl.⁷: **H04H 1/00**, H04L 12/56

(21) Anmeldenummer: **01102332.2**

(22) Anmeldetag: **01.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.02.2000 DE 10006245**

(71) Anmelder: **SIEMENS AKTIENGESELLSCHAFT**
**80333 München (DE)**

(72) Erfinder: **Lucioni, Gonzalo, Dr.**
**58454 Witten (DE)**

(54) **Verfahren zum Verbessern der Qualität einer Audioübertragung über ein Kommunikationsnetz mit Verwendung der Paketübertragung und Kommunikationseinrichtung zur Realisierung des Verfahrens**

(57)     Die Erfindung erlaubt es, die Qualität einer Audioübertragung zu verbessern, bei der Abtastwerte (A1,...,A8) eines Audiosignals enthaltende Audiodaten innerhalb von Datenpaketen asynchron über ein paketorientiertes Kommunikationsnetz (LAN) übermittelt werden. Erfindungsgemäß werden die zu übertragenden und/oder die übertragenen Audiodaten im Sinne einer Änderung ihrer Abtastrate und/oder im Sinne einer Änderung der Zeitdauer (L1+2*L2+L3) eines durch die Audiodaten repräsentierten Audiosignals unter weitgehender Beibehaltung von dessen Tonhöhe digital umgesetzt. Die Umsetzung erfolgt dabei abhängig von einer aktuell erfaßten Übertragungssituation in einer Weise, dass eine Dienstgüte der Audioübertragung optimiert wird.

FIG 1

EP 1 124 342 A2

**Beschreibung**

Die Erfindung betrifft ein Verfahren zum Verbessern der Qualität einer Audioübertragung, bei der Abtastwerte eines Audiosignals enthaltende Audiodaten innerhalb von Datenpaketen asynchron über ein paketorientiertes Kommunikationsnetz, insbesondere ein Kommunikationsnetz ohne garantierte Dienstgüte, übermittelt werden. Die Erfindung betrifft weiterhin eine Kommunikationseinrichtung zur Realisierung des erfindungsgemäßen Verfahrens.

Aufgrund von weltweit steigenden Übertragungskapazitäten von datenpaketorientierten Kommunikationsnetzen, wie z.B. dem Internet oder sog. Lokalen Netzen (LAN), wird gegenwärtig angestrebt solche Datennetze vermehrt zur Sprachkommunikation zu nutzen. Dabei besteht das Problem, dass viele weitverbreitete Typen von paketorientierten Kommunikationsnetzen eine für Echtzeit-Sprachübertragungen erforderliche Dienstgüte nicht garantieren können.

Zur Verbesserung der Echtzeiteigenschaften von Sprachübertragungen über paketorientierte Kommunikationsnetze ohne garantierte Dienstgüte sind verschiedene Maßnahmen z.B. aus der ITU-T-Empfehlung H.225.0, datiert vom Februar 1998 bekannt. So wird beispielsweise in Abschnitt 8.5 dieses Dokuments im Zusammenhang mit einer Beibehaltung einer vorgegebenen Dienstgüte vorgeschlagen, als Reaktion auf einen zunehmenden Verlust von Audiodaten enthaltenden Datenpaketen die Senderate der Datenpakete zu senken. Diese Maßnahme soll die Übertragungslast und damit die Paketverlustrate verringern. Durch die Echtzeitanforderungen einer Sprachübertragung wird dieser Regelungsmechanismus jedoch stark eingeschränkt. Zudem ist die Anwendung dieser Maßnahme auf die Senderseite beschränkt.

Es ist Aufgabe der vorliegenden Erfindung, ein Verfahren zum Verbessern der Qualität einer Audioübertragung über ein paketorientiertes Kommunikationsnetz anzugeben, das flexibler einsetzbar ist. Eine weitere Aufgabe ist es, eine Kommunikationseinrichtung zur Realisierung des erfindungsgemäßen Verfahrens anzugeben.

Gelöst wird diese Aufgabe durch ein Verfahren mit den Merkmalen des Patentanspruchs 1 oder 2 oder 3 und eine Kommunikationseinrichtung mit den Merkmalen des Patentanspruchs 11 oder 12 oder 13.

Vorteilhafte Ausführungsformen und Weiterbildungen der Erfindung sind in den abhängigen Ansprüchen angegeben.

Durch die Erfindung läßt sich die Qualität von Audioübertragungen über beliebige paketorientierte Kommunikationsnetze, wie z.B. Lokale Netze (LAN) oder Weitverkehrsnetze (WAN), auf einfache Weise verbessern. Die Erfindung läßt sich insbesondere bei paketorientierten Kommunikationsnetzen vorteilhaft anwenden, die keine garantierte Dienstgüte - häufig auch als "Quality of Service" (QoS) bezeichnet - bereitstellen.

Da zudem keinerlei Eingriff in ein bestehendes, zum Transport der Audiodaten zu verwendendes Kommunikationsnetz erforderlich ist, lassen sich die meisten bestehenden paketorientierten Kommunikationsnetze mit der Erfindung nutzen.

Die Qualität einer Audioübertragung wird bei einem erfindungsgemäßen Verfahren durch eine von einer jeweiligen Übertragungssituation abhängigen Regulierung der Audiodatenrate verbessert. Eine Änderung der Audiodatenrate erfolgt dabei durch eine digitale Umsetzung der Audiodaten. Die Audiodaten werden hierbei im Sinne einer Änderung ihrer Abtastrate, d.h. der pro Zeiteinheit anfallenden Abtastwerte des Audiosignals, und/oder im Sinne einer Änderung der Zeitdauer eines durch die Audiodaten repräsentierten Audiosignals unter weitgehender Beibehaltung von dessen Tonhöhe umgesetzt. Die erstgenannte Art der Umsetzung wird auch als "Sample Rate Alteration" (SRA) bezeichnet, und ist auf einfache Weise z.B. mit digitalen Filterbausteinen durchführbar. Die zweitgenannte Art der Umsetzung wird häufig auch als "Time Scale Modification" bezeichnet. Verschiedene Algorithmen zur Durchführung dieser Umsetzung sind beispielsweise in "Time-Scale Modification of Speech Based on Short-Time Fourier Analysis" von M.R. Portnoff, IEEE Transactions on ASSP, Juli 1981, Seiten 374 bis 390, in "Shape Invariant Time-Scale and Pitch Modification of Speech" von T.F. Quatieri und R.J. McAulay, IEEE Transactions on Signal Processing, März 1992, Seiten 497 bis 510, und in MPEG-4 Audio, ISO/IEC FCD 14496-3 Subpart 1, Abschnitt 4.1, datiert vom 15.05.98 beschrieben.

Durch die beiden vorgenannten Umsetzverfahren läßt sich die Audiodatenrate sowohl in weiteren Grenzen ändern, als auch feiner regulieren als mit bisherigen, in Zusammenhang mit paketorientierten Audioübertragungen üblichen Datenkompressionsverfahren. Beide Umsetzverfahren erlauben eine Umsetzung von kontinuierlichen Audiodatenströmen und verzögern diese nur minimal, woraus sehr gute Echtzeiteigenschaften resultieren.

Beide Umsetzverfahren lassen sich sowohl einzeln als auch in Kombination jeweils in einer die Audiodaten sendenden Kommunikationseinrichtung und/ oder in einer die Audiodaten empfangenden Kommunikationseinrichtung implementieren. Als Kommunikationseinrichtungen kommen hierbei z.B. Audioendgeräte, Audiovermittlungseinrichtungen, wie beispielsweise sogenannte PBX (Private Branch Exchange), und insbesondere Gateways und Clients gemäß der ITU-T-Empfehlung H.323 der International Telecommunication Union in Betracht.

Nach einer vorteilhaften Ausführungsform der Erfindung können die zu übertragenden Audiodaten durch die sendende Kommunikationseinrichtung umgesetzt werden und eine die Umsetzung betreffende Umsetzmeldung zur empfangenden Kommunikationseinrichtung übermittelt werden. Die übermittelte Umsetzmeldung kann dann durch die empfangende Kommunikationseinrichtung zum Steuern einer erneuten Umsetzung der Audiodaten verwendet werden. Durch eine empfangsseitige, erneute Umsetzung kann beispielsweise die senderseitig vorgenommene Umsetzung der Audiodaten wieder weitgehend rückgängig gemacht werden, um das durch die Audiodaten repräsentierte Audiosignal wieder zu entzerren.

Gemäß einer weiteren vorteilhaften Ausführungsform der Erfindung kann durch die empfangende Kommunikationseinrichtung die Übermittlung der Audiodaten überwacht werden und eine die Übermittlung betreffende Information zur sendenden Kommunikationseinrichtung übertragen werden. Diese kann die Audiodaten dann abhängig von der übertragenen Information umsetzen. So kann z.B. die Audiodatenrate und damit die Datenpaketrate durch eine senderseitige Umsetzung verringert werden, wenn die empfangende Kommunikationseinrichtung eine steigende Datenpaketverlustrate meldet.

Die Erfindung läßt sich auch vorteilhaft zum Synchronisieren von Kommunikationseinrichtungen nutzen. Dies kann dadurch realisiert werden, dass die empfangenen Audiodaten nach dem Auslesen aus einem zum Ausgleich von Datenpaketlaufzeitschwankungen vorgesehenen Eingangspuffer umgesetzt werden. Durch Steuerung des Umsetzverhältnisses der Audiodatenrate kann in diesem Fall die Auslesegeschwindigkeit des Eingangspuffers geregelt werden, wodurch sich eine Fehlsynchronisierung, wie z.B. ein sog. "Laufzeit-Jitter", ausgleichen läßt.

Nach einer vorteilhaften Weiterbildung der Erfindung können Paketverluste durch die empfangende Kommunikationseinrichtung ausgeglichen werden, indem ein einem verlorenen Datenpaket vorangehendes und/oder nachfolgendes Datenpaket durch eine erfindungsgemäße Umsetzung zeitlich so verlängert wird, dass eine durch das verlorene Datenpaket bedingte Lücke im Audiosignal geschlossen oder verkleinert wird.

Weiterhin kann die Datenrate zu übertragender Audiodaten durch eine Umsetzung gesenkt werden, zugunsten einer Übertragung von zusätzlicher Redundanzinformation, wie z.B. Fehlerkorrekturbits und/oder CRC-Prüfinformation.

Ein Ausführungsbeispiel der Erfindung wird nachfolgend anhand der Zeichnung näher erläutert.

Dabei zeigen

FIG 1 zwei über ein Lokales Netz gekoppelte Vermittlungseinrichtungen zur Sprachübertragung in schematischer Darstellung,

FIG 2 eine grafische Veranschaulichung des zeitlichen Verlaufs eines mit unterschiedlichen Abtastraten abgetasteten Audiosignals und

FIG 3 eine grafische Veranschaulichung einer Umsetzung eines Audiosignals unter weitgehender Beibehaltung von dessen Tonhöhe.

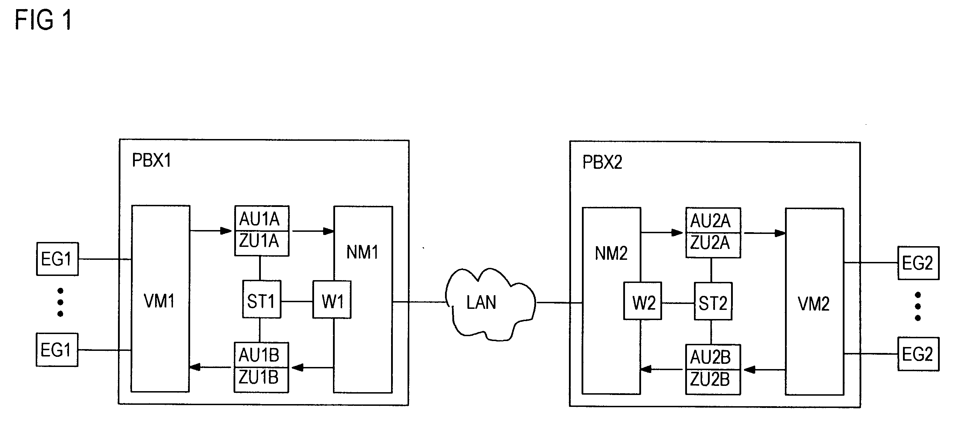

In FIG 1 sind zwei über ein Lokales Netz LAN, z.B. ein sog. Ethernet, gekoppelte Vermittlungseinrichtungen PBX1 und PBX2, jeweils mit daran angeschlossenen Sprachkommunikationsendgeräten EG1 bzw. EG2 schematisch dargestellt. Die Vermittlungseinrichtung PBX1 verfügt über ein Vermittlungsmodul VM1, über das die Endgeräte EG1 angeschlossen sind, sowie über ein Netzwerkmodul NM1, das an das lokale Netz LAN gekoppelt ist. Weiterhin weist die Vermittlungseinrichtung PBX1 eine Abtastraten-Umsetzeinrichtung AU1A und eine Zeitskala-Umsetzeinrichtung ZU1A zum Umsetzen von vom Vermittlungsmodul VM1 zum Netzwerkmodul NM1 zu übertragenden Audiodaten sowie eine Abtastraten-Umsetzeinrichtung AU1B und eine Zeitskala-Umsetzeinrichtung ZU1B zum Umsetzen von vom Netzwerkmodul NM1 zum Vermittlungsmodul VM1 zu übertragenden Audiodaten auf. Die Vermittlungseinrichtung PBX1 enthält ferner eine Steuereinrichtung ST1, die mit den Umsetzeinrichtungen AU1A, ZU1A, AU1B und ZU1B zu deren Steuerung gekoppelt ist, sowie eine mit der Steuereinrichtung ST1 und dem Netzwerkmodul NM1 gekoppelte Überwachungseinrichtung W1 zum Überwachen der Datenpaketübermittlung über das lokale Netz LAN. Zur Überwachung dieser Übermittlung kann sich die Überwachungseinrichtung WI beispielsweise der Echtzeitprotokolle RTP (Real Time Protocol) und RTCP (Real Time Control Protocol), vorzugsweise gemäß der ITU-T-Empfehlung H.225.0 der International Telecommunication Union bedienen.

Die Vermittlungseinrichtung PBX2 ist im vorliegenden Ausführungsbeispiel baugleich zur Vermittlungseinrichtung PBX1. Ihre Funktionskomponenten VM2, NM2, ST2, W2, AU2A, ZU2A, AU2B und ZU2B sind funktionsgleich zu den entsprechend bezeichneten Funktionskomponenten der Vermittlungseinrichtung PBX1.

Die Umsetzeinrichtungen AU1A, ZU1A, ..., AU2B und ZU2B dienen zum digitalen Umsetzen von Audiodaten, die in Form von Abtastwerten eines Audiosignals gegeben sind. Durch die Abtastraten-Umsetzeinrichtungen AU1A, AU1B, AU2A und AU2B können Audiodaten im Sinne einer Änderung ihrer effektiven Abtastrate umgesetzt werden. Das Verhältnis von geänderter Abtastrate zur ursprünglichen Abtastrate des Audiosignals kann dabei in weiten Grenzen geregelt werden.

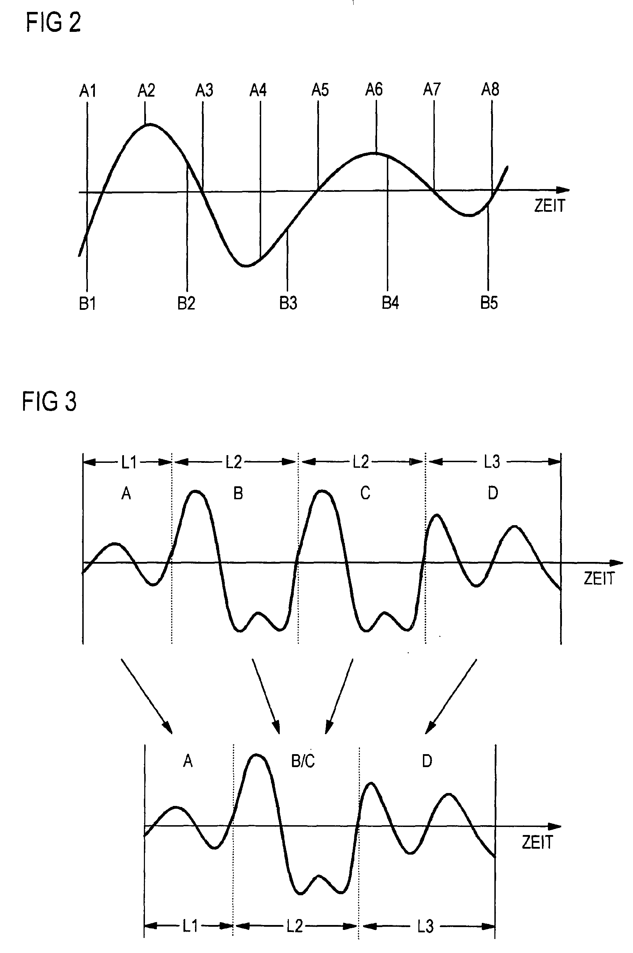

FIG 2 veranschaulicht eine solche Abtastenumsetzung anhand des zeitlichen Signalverlaufs eines Audiosignals. Der Signalverlauf des Audiosignals wird durch einen gegen eine Zeitachse aufgetragenen Kurvenzug dargestellt. Vor der digitalen Abtastratenumsetzung wird das Audiosignal durch Audiodaten repräsentiert, die aus den Abtastwerten A1, A2, ..., A8 bestehen. Die Abtastwerte A1, ... A8 sind dabei - wie durch senkrechte Linien angedeutet - durch die momentanen Amplitudenwerte des Audiosignals in äquidistant gewählten Zeitpunkten gegeben. Zur Umsetzung auf eine geänderte Abtastrate werden aus den Abtastwerten A1, ..., A8 neue Abtastwerte B1, ..., B5 bestimmt. Im dargestellten Fall sollen die Abtastwerte B1, ..., B5 den momentanen Amplitudenwerten des Audiosignals in größeren Zeitabständen als die Abtastwerte A1 bis A8 entsprechen. Abtastwerte für Zeitpunkte, die nicht durch einen der Abtastwerte A1 bis A8 repräsentiert sind können dabei z.B. durch Interpolation der Abtastwerte A1, ..., A8 und anschließender Tiefpassfilterung bestimmt werden. Eine solche Umsetzung kann beispielsweise mittels eines digitalen Filters durchgeführt werden.

Mit den Zeitskala-Umsetzeinrichtungen ZU1A, ZU1B, ZU2A und ZU2B können Audiodaten so umgesetzt werden, dass sich die Zeitdauer des durch die Audiodaten repräsentierten Audiosignals unter weitgehender Beibehaltung seiner Tonhöhe ändert. Die im vorliegenden Ausführungsbeispiel verwendete Art einer Zeitskala-Umsetzung ist z.B. in Abschnitt 4.1 des Dokuments MPEG-4 Audio, ISO/IEC FCD 14496-3, Subpart 1, datiert vom 15.05.98 beschrieben.

FIG 3 veranschaulicht eine solche Umsetzung anhand eines durch Audiodaten repräsentierten Audiosignals, das jeweils vor und nach seiner Umsetzung dargestellt ist. Das ursprüngliche Audiosignal ist im oberen Teil von FIG 3 durch einen gegen eine Zeitachse aufgetragenen Kurvenzug dargestellt. Das Audiosignal erstreckt sich über aufeinanderfolgende Zeitintervalle A, B, C und D der jeweiligen Länge L1, L2, L2 bzw. L3. Das Audiosignal sei in jedem Zeitintervall A, B, C, D jeweils durch eine Vielzahl von Abtastwerten gegeben, die der Übersichtlichkeit halber nicht explizit dargestellt sind. Zur Umsetzung des Audiosignals werden zunächst zwei aufeinanderfolgende Zeitintervalle ermittelt, die einen möglichst ähnlichen Amplitudenverlauf aufweisen. Im vorliegenden Fall sind dies die Zeitintervalle B und C. Die ermittelten Zeitintervalle B und C - genauer: die darin enthaltenen Audiodaten - werden anschließend in einem einzigen Zeitintervall B/C der Länge L2 zusammengefaßt. Aus dieser Manipulation resultiert der im unteren Teil von FIG 3 dargestellte Signalverlauf, bei dem sich das Zeitintervall A mit dem unveränderten Signalverlauf, ein einziges Zeitintervall B/C, das den Signalverlauf des ursprünglichen Audiosignals in den ursprünglichen Zeitintervallen B und C repräsentiert, und das Zeitintervall D mit einem unveränderten Signalverlauf anschließt. Die Zeitdauer L1 + 2*L2 + L3 des ursprünglichen Audiosignals wird damit auf die Zeitdauer L1 + L2 + L3 verkürzt. Zur Vermeidung von Amplitudenunstetigkeiten an den Intervallgrenzen zwischen A und B/C bzw. zwischen B/C und D kann der in das Zeitintervall B/C einzusetzende Amplitudenverlauf B/C(t) als Funktion der Zeit t aus den Amlitudenverläufen B(t) und C(t) der ursprünglichen Intervalle B und C nach der Vorschrift

$$B/C(t) = ( t * C(t) + (L2 - t) * B(t)) / L2$$

bestimmt werden. Dabei ist der Zeitparameter t bei den Größen B(t), C(t) und B/C(t) immer vom jeweiligen Zeitintervallanfang gerechnet.

Auf analoge Weise kann die Zeitdauer eines Audiosignals auch verlängert werden, indem in das ursprüngliche Audiosignal ein oder mehrere zusätzliche Intervalle mit einem nach ähnlichem Muster gebildeten Amplitudenverlauf eingefügt werden. Offensichtlich bleibt sowohl bei Verlängerung als auch bei Verkürzung des Audiosignals dessen Frequenzspektrum und damit dessen Tonhöhe weitgehend erhalten. Unbeschadet der durch das Erfordernis der weitgehenden Ähnlichkeit aufeinanderfolgender Kurvenzüge festgelegten Intervalle B und C kann der Faktor um den die Zeitdauer des Audiosignals geändert wird, weitgehend stufenlos eingestellt werden, indem die Länge der angrenzenden Intervalle A und D geeignet gewählt wird.

Im Echtzeitbetrieb entspricht eine Änderung der Zeitdauer von Teilen eines Audiosignals einer effektiven Änderung der Audiodatenrate, die sich somit auch durch eine Zeitskalaumsetzung in weiten Grenzen regeln läßt. Da bei der vorstehend beschriebenen Zeitskalaumsetzung nur aufeinanderfolgende und in der Regel sehr kurze Zeitintervalle auf einen ähnlichen Amplitudenverlauf hin untersucht werden, kann diese Umsetzung quasikontinuierlich mit nur sehr kurzer Verzögerung erfolgen.

Eine Zeitskalaumsetzung kann auch vorteilhafterweise mit einer Abtastratenumsetzung kombiniert werden. Auf diese Weise kann beispielsweise die Tonhöhe eines Audiosignals unter weitgehender Beibehaltung der Signaldauer geändert werden. Sowohl eine Abtastratenumsetzung als auch eine Zeitskalaumsetzung verzögert einen umzusetzenden Audiodatenstrom nur sehr wenig und erlaubt eine sehr schnelle Variation eines jeweiligen Umsetzverhältnisses. Dies resultiert in sehr guten Echtzeiteigenschaften, die sich insbesondere bei Echtzeit-Sprachübertragungen als sehr vorteilhaft erweisen.

Im folgenden wird ohne Einschränkung der Allgemeinheit eine Echtzeitübertragung von Sprachdaten von einem Endgerät EG1 über die Vermittlungseinrichtung PBX1, das lokale Netz LAN und die Vermittlungseinrichtung PBX2 zu einem Endgerät EG2 betrachtet.

Die vom Endgerät EG1 gesendeten Sprachdaten werden vom Vermittlungsmodul VM1 empfangen und im Rahmen einer aufgebauten Verbindung über die Umsetzeinrichtungen AU1A, ZU1A zum Netzwerkmodul NM1 vermittelt. In den Umsetzeinrichtungen AU1A und ZU1A wird der zu übertragende Sprachdatenstrom wie in den Figuren 2 und 3 veranschaulicht, umgesetzt. Die Abtastratenumsetzung und/oder Zeitskalaumsetzung wird dabei von der Steuereinrichtung ST1 gesteuert. Das Umsetzverhältnis, d.h. das Verhältnis der Sprachdatenrate des ursprünglichen und des umgesetzten Sprachdatenstroms, wird hierbei abhängig von einer von der Überwachungseinrichtung W1 erfaßten, die Sprachübertragung betreffenden Information bestimmt. Diese Information kann beispielsweise aus einer die Übermittlung betreffenden Rückmeldung der Vermittlungseinrichtung PBX2 oder aus Meldungen des Netzwerkmoduls NM1, die einen Netzwerkzustand betreffen, bestehen. Diese Meldungen können u.a. Informationen über die Paketverlustrate, die Paketlaufzeiten, eine evtl. Netzwerküberlastung oder eine Fehlsynchronisierung zwischen Sender und Empfänger betreffen. Derartige Meldungen werden beispielsweise im Rahmen des sog. RTP-Protokolls in Verbindung mit dem sog. RTCP-Protokoll übermittelt.

Die Steuereinrichtung ST1 steuert die Umsetzung der Sprachdaten in einer Weise, dass eine Dienstgüte der Sprachübertragung optimiert wird. Eine Dienstgüte kann dabei z.B. die Übertragungsverzögerung, die Paketverlustrate, die Synchronisierung zwischen Sender und Empfänger und/oder die Übertragungsbandbreite betreffen. So kann beispielsweise bei Rückmeldungen, die eine hohe Paketverlustrate anzeigen eine Senkung der Sprachdatenrate durch die Steuereinrichtung ST1 veranlaßt werden, um die Netzlast zu senken. Eine Senkung der Netzlast bewirkt in der Regel eine Verringerung der Paketverlustrate, so dass die Güte der Sprachübertragung steigt. Aufgrund der guten Echtzeiteigenschaften der Umsetzeinrichtungen AU1A und ZU1A läßt sich die Sprachdatenrate sehr schnell einer neuen, durch die Überwachungseinrichtung W1 detektierten Übertragungssituation anpassen.

Um die durch die Umsetzung der Sprachdaten verursachte Verzerrung des Sprachsignals in der Vermittlungseinrichtung PBX2 wieder ausgleichen zu können, wird von der Steuereinrichtung ST1 ferner eine Übermittlung einer die Umsetzung beschreibenden Umsetzmeldung zur Vermittlungseinrichtung PBX2 veranlaßt. Die Umsetzmeldung kann z.B. die jeweiligen Umsetzverhältnisse einer Abtastratenumsetzung und einer Zeitskalaumsetzung enthalten.

Im Netzwerkmodul NM1 werden die umgesetzten Sprachdaten zusammen mit einer die Verbindung zwischen dem Endgerät EG1 und dem Zielendgerät EG2 identifizierenden Verbindungsinformation in einzelne Datenpakete eingeteilt, die mit einer die Vermittlungseinrichtung PB2 identifizierenden Adressinformation versehen werden. Im vorliegende Ausführungsbeispiel werden die Sprachdaten gemäß dem sog. Internetprotokoll (IP) in IP-Datenpakete umgesetzt und in das lokale Netz LAN eingespeist. Dieses überträgt die IP-Datenpakete anschließend anhand deren jeweiliger IP-Adreßinformation asynchron zur Vermittlungseinrichtung PBX2. Eine Sprachübertragung mittels IP-Datenpaketen wird häufig auch als "Voice over IP" (VoIP) bezeichnet. Mit den Sprachdaten werden auch die jeweiligen Umsetzmeldungen vorzugsweise rahmensynchron über das lokale Netz LAN zur Vermittlungseinrichtung PBX2 übertragen.

Im Netzwerkmodul NM2 der Vermittlungseinrichtung PBX2 werden die Sprachdaten aus den empfangenen IP-Datenpaketen wieder extrahiert und zu einem Sprachdatenstrom zusammengesetzt. Dieser Vorgang wird von der Überwachungseinrichtung W2 überwacht. Insbesondere werden dabei Übertragungsparameter wie die Paketlaufzeiten, eventuelle Paketverluste oder eine Fehlsynchronisierung zwischen Sender und Empfänger im Rahmen des RTP- und RTCP-Protokolls festgestellt. Im Rahmen dieser Echtzeitprotokolle wird weiterhin auch eine die festgestellten Übertragungsparameter beschreibende Rückmeldung gebildet und über das lokale Netz LAN zur Vermittlungseinrichtung PBX1 übertragen. Zumindest ein Teil der festgestellten Übertragungsparameter wird von der Überwachungseinrichtung W2 zur Steuereinrichtung ST2 übermittelt. Weiterhin wird durch die Überwachungseinrichtung W2 die empfangene Umsetzmeldung erfaßt und ebenfalls zur Steuereinrichtung ST2 übermittelt.

Die empfangenen Sprachdaten werden vom Netzwerkmodul NM2 den Umsetzeinrichtungen AU2A und ZU2A zugeführt, die die Sprachdaten auf Veranlassung der Steuereinrichtung ST2 umsetzen und zum Vermittlungsmodul VM2 übertragen, das die Sprachdaten schließlich zum Zielendgerät EG2 vermittelt. Die Umsetzung der Sprachdaten wird von der Steuereinrichtung ST2 abhängig von der empfangenen Umsetzmeldung und den festgestellten Übertragungsparametern gesteuert. Im Regelfall wird die Umsetzung anhand der Umsetzmeldung so gesteuert, daß die in der Vermittlungseinrichtung PBX1 erfolgte Änderung der Sprachdatenrate wieder weitgehend rückgängig gemacht wird. Durch diese empfängerseitige Entzerrung wird das Sprachsignal wieder seiner ursprünglichen Form angenähert. Im Falle eines von der Überwachungseinrichtung W2 festgestellten Paketverlustes wird die Umsetzung kurzzeitig in einer Weise modifiziert, dass die Zeitdauer der Sprachsignale eines dem verlorenen Datenpaket vorangehenden und nachfolgenden Datenpakets verlängert wird, um die durch das verlorene Datenpaket bedingte Lücke im Sprachsignal zu schließen. Durch eine Verwendung der Zeitdauerumsetzeinrichtung ZU2A kann bei einer solchen Rekonstruktion verlorener Datenpakete die Tonhöhe des Sprachsignals weitgehend erhalten werden. Dieses Verfahren eignet sich damit insbesondere zur Rekonstruktion von MFV-Wähltönen (MFV: Mehrfrequenz-Wählverfahren), bei denen die Tonhöhe eine wesentliche Steuerfunktion hat.

Über die Steuerung des Umsetzverhältnisses einer Umsetzung läßt sich auch die Auslesegeschwindigkeit eines zum Ausgleich von Datenpaketlaufzeitschwankungen vorgesehenen Eingangspufferspeichers (nicht dargestellt) und/oder Synchronisationspufferspeichers (nicht dargestellt) des Netzwerkmoduls NM2 regeln. Der jeweilige Pufferspeicher ist dazu über die Umsetzeinrichtungen AU2A, ZU2A auszulesen. Dabei ist von der Überwachungseinrichtung W2 auch ein jeweils aktueller Füllstand des Pufferspeichers zu erfassen. Dieser Füllstand wird zur Steuereinrichtung ST2 übermittelt, die das Umsetzverhältnis abhängig von diesem Füllstand bestimmt. Für den Fall, daß die umgesetzten Sprachdaten aus den Umsetzeinrichtungen AU2A, ZU2A mit konstanter Datenrate ausgelesen werden, entspricht jede Änderung des Umsetzverhältnisses einer Änderung der Auslesegeschwindigkeit des Pufferspeichers. Durch eine Regelung der Auslesegeschwindigkeit kann in vielen Fällen ein Über- oder Unterlauf des Pufferspeichers verhindert werden. Somit können im Allgemeinen kleinere Pufferspeicher vorgesehen werden, wodurch sich die durch den Pufferspeicher bedingte Laufzeitverzögerung der Sprachdaten verringert. Dies erhöht wiederum die subjektive Qualität von Sprachverbindungen.

Für eine Übertragung von Sprachdaten in umgekehrter Richtung von einem Endgerät EG2 über die Vermittlungseinrichtung PBX2, das lokale Netz LAN und die Vermittlungseinrichtung PBX1 zu einem Endgerät EG1 gelten die obigen Ausführungen sinngemäß. Anstelle der Umsetzeinrichtungen AU1A, ZU1A, AU2A und ZU2A werden dabei die Umsetzeinrichtungen AU2B, ZU2B AU1B und ZU1B zum sende- bzw. empfangsseitigen Umsetzen der Sprachdaten verwendet.

**Patentansprüche**

1. Verfahren zum Verbessern der Qualität einer Audioübertragung, bei der Abtastwerte (A1,...,A8) eines Audiosignals enthaltende Audiodaten von einer sendenden Kommunikationseinrichtung (PBX1) innerhalb von Datenpaketen asynchron über ein paketorientiertes Kommunikationsnetz (LAN) zu einer empfangenden Kommunikationseinrichtung (PBX2) übermittelt werden und
eine die Übermittlung von Datenpaketen betreffende Information erfasst wird,
dadurch gekennzeichnet,
dass die Audiodaten durch digitale Filterung im Sinne einer Änderung ihrer Abtastrate umgesetzt werden, wobei die Abtastrate abhängig von der erfassten Information dergestalt geändert wird, dass durch die geänderte Abtastrate eine Dienstgüte der Audioübertragung im Hinblick auf eine aktuelle, durch die erfaßte Information angezeigte Übertragungssituation optimiert wird.

2. Verfahren zum Verbessern der Qualität einer Audioübertragung, bei der Abtastwerte eines Audiosignals enthaltende Audiodaten von einer sendenden Kommunikationseinrichtung (PBX1) innerhalb von Datenpaketen asynchron über ein paketorientiertes Kommunikationsnetz (LAN) zu einer empfangenden Kommunikationseinrichtung (PBX2) übermittelt werden und
eine die Übermittlung von Datenpaketen betreffende Information erfasst wird,
dadurch gekennzeichnet,
dass die Audiodaten im Sinne einer Änderung der Zeitdauer (L1+2*L2+L3) eines durch die Audiodaten repräsentierten Audiosignals unter weitgehender Beibehaltung einer Tonhöhe des Audiosignals digital umgesetzt werden, wobei die Zeitdauer (L1+2*L2+L3) abhängig von der erfassten Information dergestalt geändert wird, dass durch die geänderte Zeitdauer (L1+L2+L3) eine Dienstgüte der Audioübertragung im Hinblick auf eine aktuelle, durch die erfaßte Information angezeigte Übertragungssituation optimiert wird.

3. Verfahren nach Anspruch 1 und 2.

4. Verfahren nach einem der vorhergehenden Ansprüche,
dadurch gekennzeichnet,
dass die zu übertragenden Audiodaten durch die sendende Kommunikationseinrichtung (PBX1) umgesetzt werden und eine Umsetzmeldung über die Umsetzung von der sendenden zur empfangenden Kommunikationseinrichtung (PBX2) übermittelt wird.

5. Verfahren nach Anspruch 4,
dadurch gekennzeichnet,
dass die übertragenen Audiodaten von der empfangenden Kommunikationseinrichtung (PBX2) erneut umgesetzt werden, wobei die bei der erneuten Umsetzung stattfindende Änderung der Audiodaten anhand der übermittelten Umsetzmeldung festgelegt wird.

6. Verfahren nach einem der vorhergehenden Ansprüche,
dadurch gekennzeichnet,

dass durch die empfangende Kommunikationseinrichtung (PBX2) die Übermittlung der Datenpakete überwacht wird und eine diese Übermittlung betreffende Information zur sendenden Kommunikationseinrichtung (PBX1) übermittelt wird, und
dass durch die sendende Kommunikationseinrichtung (PBX1) die Audiodaten abhängig von der übermittelten Information umgesetzt werden.

7. Verfahren nach Anspruch 6,
dadurch gekennzeichnet,

dass durch die übermittelte Information eine Datenpaket-Verlustrate angegeben wird, und dass bei steigender Datenpaket-Verlustrate die Audiodaten durch die sendende Kommunikationseinrichtung (PBX1) so umgesetzt werden, dass die Audiodatenrate verringert wird.

8. Verfahren nach einem der vorhergehenden Ansprüche,
dadurch gekennzeichnet,
dass eine erkannte Fehlanpassung der Datenrate der empfangenen Audiodaten von der empfangenden Kommunikationseinrichtung (PBX2) durch eine Umsetzung der empfangenen Audiodaten zumindest teilweise ausgeglichen wird.

9. Verfahren nach einem der vorhergehenden Ansprüche,
dadurch gekennzeichnet,
dass die empfangenen Audiodaten nach dem Auslesen aus einem zum Ausgleich von Datenpaket-Laufzeitschwankungen vorgesehenen Eingangspuffer umgesetzt werden, wobei die Auslesegeschwindigkeit des Eingangspuffers über eine durch die Umsetzung bedingte Änderung der Audiodatenrate geregelt wird.

10. Verfahren nach einem der vorhergehenden Ansprüche,
dadurch gekennzeichnet,
dass durch die empfangende Kommunikationseinrichtung (PBX2) bei Verlust eines Datenpakets die in einem dem verlorenen Datenpaket vorangehenden und/oder nachfolgenden Datenpaket enthaltenen Audiodaten im Sinne einer Verlängerung der Zeitdauer eines durch die Audiodaten repräsentierten Audiosignals so umgesetzt werden, daß durch die Verlängerung der Zeitdauer eine durch das verlorene Datenpaket bedingte Lücke im Audiosignal zumindest verkleinert wird.

11. Kommunikationseinrichtung (PBX1, PBX2) zum Senden und/oder Empfangen von Abtastwerte (A1,...,A8) eines Audiosignals enthaltenden Audiodaten über ein paketorientiertes Kommunikationsnetz (LAN), mit
einem Überwachungsmittel (W1, W2) zum Erfassen einer eine Übermittlung von Datenpaketen mit Audiodaten betreffenden Information,
gekennzeichnet durch

eine digitale Abtastraten-Umsetzeinrichtung (AU1A, AU1B, AU2A, AU2B) zum Umsetzen der Audiodaten im Sinne einer Änderung ihrer Abtastrate und
ein Steuermittel (ST1, ST2) zum Steuern der Abtastratenänderung in Abhängigkeit von der erfassten Information.

12. Kommunikationseinrichtung (PBX1, PBX2) zum Senden und/oder Empfangen von Abtastwerte eines Audiosignals enthaltenden Audiodaten über ein paketorientiertes Kommunikationsnetz (LAN),
mit
einem Überwachungsmittel (WI, W2) zum Erfassen einer eine Übermittlung von Datenpaketen mit Audiodaten betreffenden Information,
gekennzeichnet durch

eine digitale Zeitskala-Umsetzeinrichtung (ZU1A, ZU1B, ZU2A, ZU2B) zum Umsetzen der Audiodaten im Sinne einer Änderung der Zeitdauer (L1+2*L2+L3) eines durch die Audiodaten repräsentierten Audiosignals unter weitgehender Beibehaltung einer Tonhöhe des Audiosignals und
ein Steuermittel (ST1, ST2) zum Steuern der Zeitdaueränderung in Abhängigkeit von der erfassten Information.

13. Kommunikationseinrichtung nach Anspruch 11 und 12.

14. Kommunikationseinrichtung nach Anspruch 11 oder 13,
dadurch gekennzeichnet,
dass die Abtastraten-Umsetzeinrichtung (AU1A, AU1B, AU2A, AU2B) einen digitalen Filterbaustein zum Umsetzen der Audiodaten aufweist.

15. Kommunikationseinrichtung nach Anspruch 12 oder 13,
dadurch gekennzeichnet,
dass die Zeitskala-Umsetzeinrichtung (L1+2*L2+ L3) einen digitalen Signalprozessor zum Umsetzen der Audiodaten aufweist.

## FIG 1

EP 1 124 342 A2

## FIG 2

## FIG 3